(19) Europäisches Patentamt
European Patent Office
Office européen des brevets

(11) **EP 4 525 324 A1**

(12) **EUROPEAN PATENT APPLICATION**
published in accordance with Art. 153(4) EPC

(43) Date of publication:
**19.03.2025 Bulletin 2025/12**

(21) Application number: 23820131.3

(22) Date of filing: **09.06.2023**

(51) International Patent Classification (IPC):
*H04B 7/06* (2006.01)    *H04W 16/28* (2009.01)
*H04B 7/0408* (2017.01)    *H04W 72/20* (2023.01)
*H04W 72/51* (2023.01)    *H04W 76/14* (2018.01)
*H04W 4/40* (2018.01)

(52) Cooperative Patent Classification (CPC):
H04B 7/0408; H04B 7/06; H04W 4/40;
H04W 16/28; H04W 72/20; H04W 72/51;
H04W 76/14

(86) International application number:
**PCT/KR2023/007928**

(87) International publication number:
**WO 2023/239196 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.06.2022 KR 20220070846**

(71) Applicant: Samsung Electronics Co., Ltd.
Suwon-si, Gyeonggi-do 16677 (KR)

(72) Inventors:
• **PARK, Kyoungmin**
Suwon-si, Gyeonggi-do 16677 (KR)
• **RYU, Hyunsuk**
Suwon-si, Gyeonggi-do 16677 (KR)
• **SHIN, Cheolkyu**
Suwon-si, Gyeonggi-do 16677 (KR)

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR CONFIGURING INITIAL BEAM FOR DEVICE-TO-DEVICE COMMUNICATION**

(57) The present disclosure relates to a 5G or 6G communication system for supporting a higher data transmission rate. A method performed by a first terminal in a communication system, according to an embodiment of the present disclosure, comprises the steps of: identifying a sidelink resource; transmitting a beam acquisition request on the sidelink resource; receiving, from a second terminal, a response to the beam acquisition request; and transmitting ID information of the first terminal to the second terminal, wherein the beam acquisition request may be transmitted based on a reference signal without the ID information of the first terminal, and the beam acquisition request may be transmitted based on a portion of one slot.

FIG. 12

## Description

### [Technical Field]

The present disclosure relates to a method and apparatus for configuring an initial beam for device-to-device communication, more specifically, to a technique for performing device-to-device communication by utilizing beam forming, for example, a method and apparatus for performing an initial beam configuration and a terminal detection in a sidelink.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles on the basis of information regarding positions and states of vehicles transmitted by the vehicles and for enhancing user convenience, NR-U (New Radio Unlicensed) aimed at system operations conforming to various regulation-related requirements in unlicensed bands, NR user equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services on the basis of UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next generation distributed computing technology for implementing services at levels of complexity exceeding the limit of UE operation capability by utilizing ultra-high-performance communication and computing resources.

As the types of fields and services requiring communication are diversified, in addition to the method of performing communication through a central network including a base station, a method of exchanging information through device-to-device communication has been proposed. The direct communication method between terminals, which is subdivided into D2D, sidelink, etc. depending on the detailed purpose and design method of the technology, can implement communication in areas where base stations are not installed, and in the cases where the purpose is to support communication services requiring low performance, there is an advantage in that the operation and structure of the communication control unit are simplified compared to the method of performing communication through a central network. On the other hand, in the cases where a certain level of data rate, reliability, etc. are required, each terminal directly performs the control unit operation that was previously performed by the central network, which further increases the implementation and operation complexity of the terminal.

After standardizing the basic operations to support device-to-device communication, NR sidelink has standardized the origins of complex operations and functions to support higher communication performance, such as support for MIMO techniques, and is considering support for operations in more diverse environments, such as CA (carrier aggregation) support, unlicensed band operation, and FR2 (frequency range 2) operation. The above considerations are all techniques for increasing the wireless band that can be used for sidelink communication , and among these, FR2 operation in particular can provide a significantly wider band than before, and thus has the advantage of significantly increasing the communication capacity through sidelink, for example, the data rate for each communication or the number of terminals performing sidelink communication simultaneously, in the case that an appropriate technique for link control exists. The increase in demand for wireless sensor communications, represented by smart factories, and the increase in the use of personal small wireless portable devices, represented by wearable devices, are expected to require an increase in sidelink communication capacity, and therefore, the development of direct communication techniques between FR2 domain terminals, especially sidelink communication techniques, is necessary.

The present disclosure proposes a method for performing a device-to-device initial beam configuration and terminal detection, which are techniques for supporting sidelink operation. The technique proposed by the present disclosure is not limited to sidelink and can be applied to various methods for supporting device-to-device communication.

[Disclosure of Invention]

[Technical Problem]

The present disclosure proposes an initial link configuration technique, which is an essential element for supporting device-to-device communication in FR2, and a signal configuration to support the same.

More specifically, the present disclosure proposes a method to increase the efficiency of device-to-device communication by reducing the time required for initial beam configuration and the amount of radio resources used, and also by performing initial beam configuration and terminal verification tasks in parallel, thereby reducing the overall time delay required for initial communication link configuration and the amount of radio resources used.

[Solution to Problem]

A method performed by a first terminal in a communication system, according to an embodiment of the present disclosure for achieving the technical task described above, comprises the steps of: identifying a sidelink resource; transmitting a beam acquisition request on the sidelink resource; receiving, from a second terminal, a response to the beam acquisition request; and transmitting ID information of the first terminal to the second terminal, wherein the beam acquisition request may be transmitted based on a reference signal without the ID information of the first terminal, and the beam acquisition request may be transmitted based on a portion of one slot.

In a communication system according to an embodiment of the present disclosure, a method performed by a second terminal comprises the steps of: receiving, from a first terminal, a beam acquisition request on a sidelink resource; transmitting a response to the beam acquisition request from the first terminal; and receiving ID information of the first terminal from the first terminal, wherein the beam acquisition request may be received based on a reference signal without the ID information of the first terminal, and the beam acquisition request may be received based on a portion of one slot.

In a communication system according to an embodiment of the present disclosure, a first terminal comprises a transceiver; and a control unit configured to identify a sidelink resource, transmit a beam acquisition request on the sidelink resource, receive a response to the beam acquisition request from a second terminal, and transmit ID information of the first terminal to the second terminal, wherein the beam acquisition request may be transmitted based on a reference signal without the ID information of the first terminal, and the beam acquisition request may be transmitted based on a portion of one slot.

In a communication system according to an embodiment of the present disclosure, a second terminal comprises a transceiver; and a control unit configured to receive a beam acquisition request from a first terminal on a sidelink resource, transmit a response to the beam acquisition request from the first terminal, and receive ID information of the first terminal from the first terminal, wherein the beam acquisition request may be received based on a reference signal without the ID information of the first terminal, and the beam acquisition request may be received based on a portion of one slot.

**[Advantageous Effects of Invention]**

According to an embodiment of the present disclosure, device-to-device communication becomes possible in FR2, and in particular, more efficient radio resource management becomes possible compared to when using an initial link configuration method used in a conventional base station-terminal link. For example, the time required for establishing a wireless link between terminals is reduced, and also the amount of radio resource used for the initial configuration is reduced. According to another embodiment of the present disclosure, it is also possible for first and second terminals performing device-to-device communication to simultaneously perform a wireless link configuration operation with a third terminal and thereby perform device-to-device communication. That is, it is possible for a terminal to perform separate communication with each of multiple terminals through multiple links.

The effects obtainable from the present disclosure are not limited to the effects mentioned above, and other effects not mentioned will be clearly understood by those skilled in the art to which the present disclosure pertains from the description below.

**[Brief Description of Drawings]**

FIG. 1a is a diagram illustrating an example of a communication system to which an embodiment of the present disclosure may be applied.

FIG. 1b is a diagram illustrating another example of a communication system to which an embodiment of the present disclosure may be applied.

FIG. 1c is a diagram illustrating another example of a communication system to which an embodiment of the present disclosure may be applied.

FIG. 1d is a diagram illustrating another example of a communication system to which an embodiment of the present disclosure may be applied.

FIG. 2 is a diagram illustrating a V2X communication method through a sidelink according to an embodiment of the present disclosure.

FIG. 3 is a diagram for explaining a resource pool defined as a set of resources in time and frequency used for transmission and reception of a sidelink according to an embodiment of the present disclosure.

FIG. 4 is a diagram illustrating a method for a base station to allocate transmission resources in a sidelink according to an embodiment of the present disclosure.

FIG. 5 is a diagram illustrating a method for a terminal to directly allocate transmission resources of a sidelink through sensing in a sidelink according to an embodiment of the present disclosure.

FIG. 6 is a diagram illustrating a mapping structure of physical channels mapped to one slot in a sidelink according to an embodiment of the present disclosure.

FIG. 7 is a diagram illustrating an example of a beam sweeping operation for initial link configuration between terminals according to an embodiment of the present disclosure.

FIG. 8 is a diagram illustrating an example of initial link configuration for device-to-device communication using a base station control method.

FIG. 9 is a diagram illustrating an example of transmission and reception of an initial link configuration signal for device-to-device communication using a base station control method.

FIG. 10 is a diagram illustrating an example of a method for sequentially performing initial beam selection and terminal detection according to an embodiment of the present disclosure.

FIG. 11 is a diagram illustrating an example of signal transmission and reception when sequentially performing initial beam selection and terminal detection according to an embodiment of the present disclosure.

FIG. 12 is a diagram illustrating an example of an initial configuration method according to an embodiment of the present disclosure.

FIG. 13 is a diagram illustrating an example of signal transmission and reception in an initial configuration method according to an embodiment of the present disclosure.

FIG. 14 is a diagram illustrating an example of transmission and reception in an initial configuration method according to another embodiment of the present disclosure.

FIG. 15 is a diagram illustrating an example of radio resource configuration for multi-connectivity support according to an embodiment of the present disclosure.

FIG. 16 is a diagram illustrating an example of multiple connections utilizing a subset of radio resources according to an embodiment of the present disclosure.

FIG. 17 is a diagram illustrating the configuration of a terminal according to an embodiment of the present disclosure.

FIG. 18 is a diagram illustrating the configuration of a base station according to an embodiment of the present disclosure.

[Mode for the Invention]

Hereinafter, embodiments of the present disclosure will be described in detail with reference to the attached drawings.

In describing the embodiments, descriptions of technical contents that are well known in the technical field to which the present disclosure belongs and are not directly related to the present disclosure will be omitted. This is to convey the gist of the present disclosure more clearly without obscuring it by omitting unnecessary descriptions.

For the same reason, some components in the attached drawings are exaggerated, omitted, or schematically illustrated. In addition, the size of each component does not entirely reflect the actual size. The same or corresponding components in each drawing are given the same reference numbers.

The advantages and features of the present disclosure, and the methods for achieving them will become clear by reference to the embodiments described in detail below along with the accompanying drawings. However, the present disclosure is not limited to the embodiments disclosed below, but may be implemented in a variety of different forms and the present embodiments are merely provided to ensure that the disclosure of the present disclosure is complete and to fully inform the scope of the disclosure to persons of ordinary knowledge in the technical field to which the present disclosure pertains, and the present disclosure is only defined by the scope of the claims. Throughout the specification, the same reference numerals refer to the same components.

In this case, it will be understood that each block of the processing flowchart illustrations and combinations of the flowchart illustrations may be performed by computer program instructions. These computer program instructions may be mounted on a processor of a general purpose computer, a special purpose computer, or other programmable data processing equipment, such that the instructions, when executed by the processor of the computer or other programmable data processing equipment, create means for performing the functions described in the flowchart block(s). These computer program instructions may be stored in computer-usable or computer-readable memory that may be directed to a computer or other programmable data processing equipment to implement the functions in a specific manner, so that the instructions stored in the computer-usable or computer-readable memory may produce a manufactured item comprising instructional means for performing the functions described in the flowchart block(s). The computer program instructions may also be mounted on a computer or other programmable data processing equipment and a series of operational steps are performed on the computer or other programmable data processing equipment to create a computer-executable process, such that the instructions performing the computer or other programmable data processing equipment may also provide steps for performing the functions described in the flowchart block(s).

In addition, each block may represent a module, a segment, or a portion of code comprising one or more executable instructions for performing a specified logical function(s). It should also be noted that in some alternative embodiments, the functions recited in the blocks may occur out of sequence. For example, two blocks shown one after the other may in fact be performed substantially simultaneously, or the blocks may be performed in reverse order according to the functions they sometimes perform.

In this case, the term '~unit' used in the present embodiment refers to software or a hardware component such as an FPGA or ASIC, which may perform any of the roles. However, '~unit' is not software or hardware specific. It may be configured to reside on an addressable storage medium, or it may be configured to execute one or more processors. Therefore, in one example, '~unit' includes components such as software components, object-oriented software components, class components, and task components, processes, functions, properties, procedures, subroutines, segments of program code, drivers, firmware, microcode, circuits, data, databases, data structures, tables, arrays, and variables. The functionality provided within the components and '~units' may be combined into fewer components and '~units', or further separated into additional components and '~units'. Furthermore, the components and '~units' may be implemented to play one or more CPUs within the device or the security multimedia card. In addition, in the embodiment, '~unit' may include one or more processors.

In explaining specifically the embodiments of the present disclosure, the main targets are the New RAN (NR) radio access network and the packet core (5G System, or 5G Core Network, or NG Core: next generation core) which is a core network on the 5G mobile communication standard disclosed by 3GPP (3rd generation partnership project long term evolution), a mobile communication standard standardization organization. However, the main gist of the present disclosure may be applied to other communication systems having a similar technical background with slight modifications without significantly departing from the scope of the present disclosure, and this will be possible at the discretion of a person having technical knowledge skilled in the art of the present disclosure.

In a 5G system, a network data collection and analysis function (NWDAF), which is a network function that provides a function to analyze and provide data collected from a 5G network to support network automation, may be defined. NWDAF may collect/store/analyze information from a 5G network and provide the results to an unspecified network function (NF), and the analysis results may be independently used by each NF.

For convenience of explanation below, some terms and names defined in 3GPP standards (standards for 5G, NR, LTE or similar systems) may be used. However, the present disclosure is not limited by the terms and names, and may be equally applied to systems that comply with other standards.

In addition, terms used in the following description to identify connection nodes, terms referring to network objects (network entities), terms referring to messages, terms referring to interfaces between network entities, terms referring to various identification information, etc. are examples for convenience of explanation. Therefore, the present disclosure is not limited to the terms used, and other terms referring to objects having equivalent technical meanings may be used.

To meet the increasing demand for wireless data traffic since the commercialization of 4G communication systems, efforts are being made to develop improved 5G communication systems (NR, New Radio). To achieve high data rates, 5G communication systems are designed to enable resources in ultra-high frequency (mmWave) bands (such as the 28 GHz frequency band). To mitigate path loss of radio waves in ultra-high frequency bands and increase the transmission distance of radio waves, 5G communication systems use beamforming, massive MIMO, and full-dimension multi-band MIMO. Full Dimensional MIMO (FD-MIMO), array antenna, analog beam-forming, and large scale antenna technologies are being discussed. In addition, unlike LTE, 5G communication systems support various subcarrier spacings such as 30 kHz, 60 kHz, and 120 kHz, as well as 15 kHz, the Physical Control Channel uses Polar Coding, and the Physical Data Channel uses LDPC (Low Density Parity Check). In addition, both DFT-S-OFDM and CP-OFDM are used as waveforms for uplink transmission. While LTE supports HARQ (Hybrid ARQ) retransmission on a per-TB (Transport Block) basis, 5G may additionally support HARQ retransmission on the basis of CBG (Code Block Group) that groups multiple CBs (Code Blocks).

In addition, to improve the network of the system, technologies such as advanced small cells, cloud radio access networks (cloud RAN), ultra-dense networks, device to device communication (D2D), wireless backhaul, V2X (Vehicle to Everything) networks, cooperative communication, CoMP (Coordinated Multi-Points), and interference cancellation are being developed in 5G communication systems.

Meanwhile, the Internet is evolving from a human-centered network where humans create and consume information to an Internet of Things (IoT) network where information is exchanged and processed between distributed components such as objects. IoE (Internet of Everything) technology, which combines IoT technology with big data processing technology through connection to cloud servers, is also emerging. In order to implement IoT, technological elements such as sensing technology, wireless communication and network infrastructure, service interface technology, and security technology are required, and recently, sensor networks for connection between objects, machine-to-machine (M2M), and machine type communication (MTC) are being studied. In the IoT environment, intelligent IT (Internet Technology) services that collect and analyze data generated from connected objects and create new values for human life may be provided. IoT may be applied to fields such as smart homes, smart buildings, smart cities, smart cars or connected cars, smart grids, healthcare, smart home appliances, and advanced medical services through convergence and combination between existing IT (information technology) technologies and various industries.

Accordingly, various attempts are being made to apply 5G communication systems to IoT networks. For example, technologies such as sensor networks, machine-to-machine (M2M), and machine type communication (MTC) are being implemented by techniques such as beam forming, MIMO, and array antennas, which are 5G communication technologies. The application of cloud radio access network (cloud RAN) as a big data processing technology described above may also be referred to as an example of the convergence of 5G and IoT technologies. In this way, multiple services may be provided to users in a communication system, and in order to provide such multiple services to users, a method and an apparatus using the method that may provide each service within the same time period according to the features are required. Various services provided in 5G communication systems are being studied, and one of them is a service that satisfies low latency and high reliability requirements. In particular, for vehicle communication, the NR V2X system supports unicast communication, groupcast (or multicast) communication, and broadcast communication between terminals. In addition, NR V2X aims to provide more advanced services such as platooning, advanced driving, extended sensor, and remote driving, unlike LTE V2X, which aims to transmit and receive basic safety information required for vehicle driving on the road.

In particular, inter-UE coordination may be considered in the sidelink. Here, inter-UE coordination may mean providing an improved sidelink service by sharing information that may be helpful between terminals. In the present disclosure, information shared for inter-UE coordination is not limited to specific information. Such information may include resource allocation information. In general, a terminal performing transmission in the sidelink may directly allocate resources through a sensing and resource selection procedure (Mode2), or may be allocated resources from a base station when the terminal performing transmission is within the base station coverage (Mode1). However, a method in which a terminal receives resource allocation and resource allocation-related information from another terminal through inter-UE coordination may be additionally considered. A method in which resource allocation and resource allocation-related information are provided from another terminal through inter-UE coordination may have the following advantages. First, there are cases in which it is more advantageous to receive resource allocation from another terminal. For example, considering a groupcast scenario, it may be advantageous for groupcast operation if the leader terminal of the group directly controls the resource allocation of other terminals in the group and provides resource allocation and resource allocation-related information to other terminals in the group. In addition, if a terminal performing transmission is located outside the base station coverage and a terminal receiving it is located within the base station coverage, under the assumption that the base station can better allocate resources to the sidelink terminal by receiving information related to resource allocation from the terminals, a method may be considered in which a terminal within the base station coverage receives resource allocation information from the base station and transmits it to a terminal outside the base station coverage. In addition, a method in which a terminal receiving it directly indicates to the transmitting terminal the resource allocation location it wants to receive from the transmitting terminal through a sensing and resource selection procedure, rather than a method in which a terminal performing transmission directly allocates resources through a sensing and resource selection procedure, may provide improved resource allocation performance by solving the problems of hidden node, exposed node, and half duplex. The second reason why it is more advantageous to receive resource allocation from another terminal is that if the terminal performing the transmission is a terminal requiring low power consumption such as a portable terminal, the power consumption of the terminal may be minimized if another terminal performs resource allocation on its behalf. It should be noted that a lot of power may be consumed when the terminal performs sensing for selecting sidelink transmission resources. Therefore, considering this advantage, the operations of the terminal and the base station for sharing resource allocation-related information by performing the inter-UE coordination should be defined. Therefore, in order to perform inter-UE coordination, the present disclosure proposes detailed methods for determining how the terminal performing the corresponding operation is determined, what information is required, and indicating resource allocation information.

Embodiments of the present specification are proposed to support the above-described scenario, and in particular, aim to provide a method and apparatus for performing inter-UE coordination in a sidelink and providing resource allocation related information through the same.

Embodiments of the present specification are proposed to support the above-described scenario, and in particular, aim to provide a method and apparatus for performing DRX in sidelink.

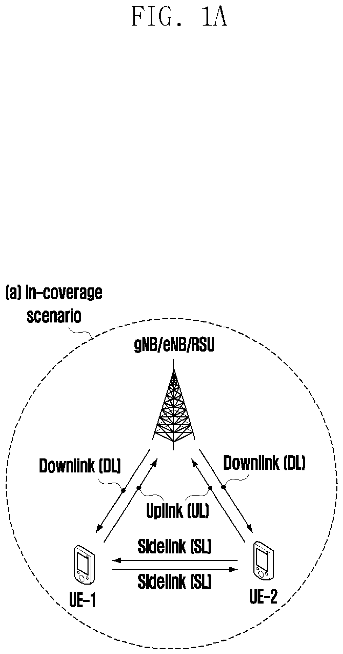

FIGS. 1a to 1d are diagrams illustrating communication systems to which embodiments of the present disclosure may be applied.

FIG. 1a illustrates an example of a case where all V2X terminals (UE-1 and UE-2) are located within the coverage of a base station (In-Coverage, IC). All V2X terminals may receive data and control information from a base station through downlink (DL) or transmit data and control information to the base station through uplink (UL). In this case, the data and control information may be data and control information for V2X communication. The data and control information may also be data and control information for general cellular communication. In addition, V2X terminals may transmit/receive data and control information for V2X communication through sidelink (SL).

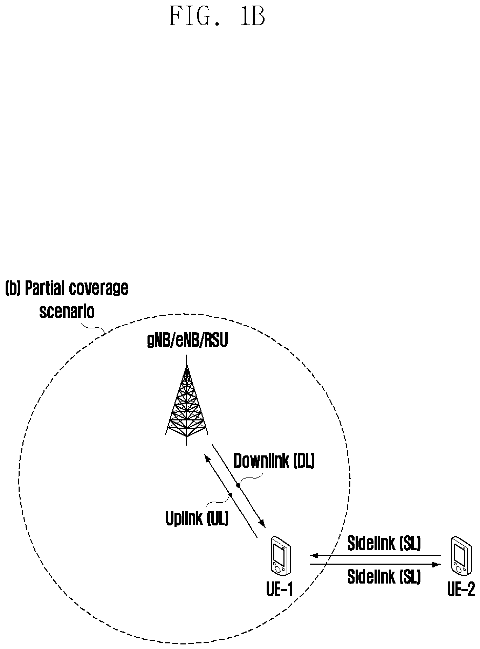

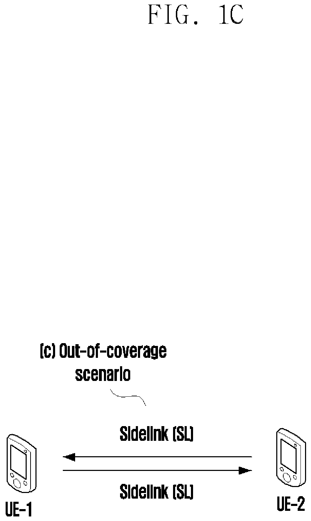

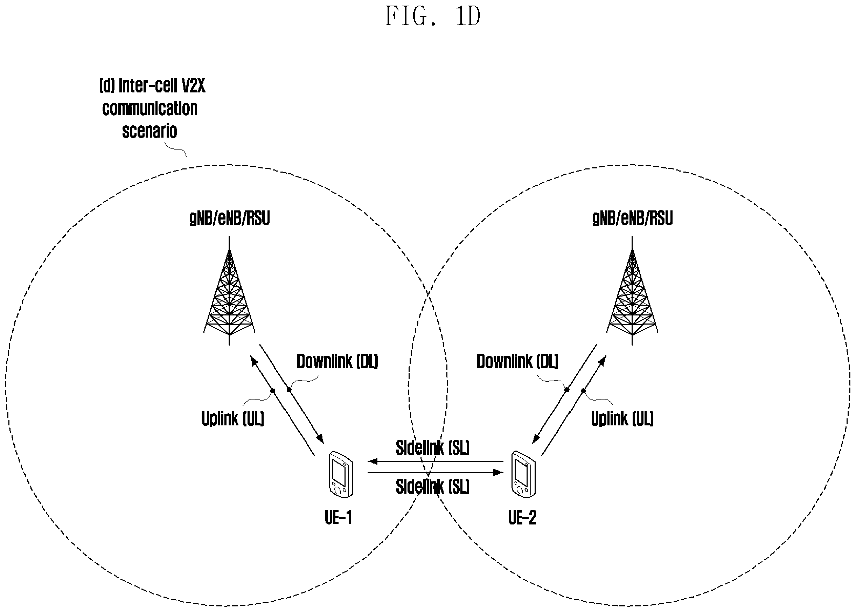

FIG. 1b illustrates an example of a case where UE-1 among V2X terminals is located within the coverage of the base station and UE-2 is located outside the coverage of the base station. That is, (b) of FIG. 1 illustrates an example of partial coverage (PC) in which some V2X terminals (UE-2) are located outside the coverage of the base station. A V2X terminal (UE-1) located within the coverage of the base station may receive data and control information from the base station through downlink or transmit data and control information to the base station through uplink. A V2X terminal (UE-2) located outside the coverage of the base station may not receive data and control information from the base station through downlink and may not transmit data and control information to the base station through uplink. The V2X terminal (UE-2) may transmit/receive data and control information for V2X communication to/from the V2X terminal (UE-1) through sidelink.

FIG. 1c illustrates an example where all V2X terminals are located out-of-coverage (OOC) of the base station. Therefore, V2X terminals (UE-1, UE-2) may not receive data and control information from the base station through downlink and may not transmit data and control information to the base station through uplink. V2X terminals (UE-1, UE-2) may transmit/ receive data and control information for V2X communication through sidelink.

FIG. 1d illustrates an example of a scenario for performing V2X communication between V2X terminals (UE-1, UE-2) located in different cells. Specifically, (d) of FIG. 1 illustrates a case where V2X terminals (UE-1, UE-2) are connected to different base stations (RRC connected state) or are camping (RRC disconnected state, i.e., RRC idle state). At this time, the V2X terminal (UE-1) may be a V2X transmitting terminal and the V2X terminal (UE-2) may be a V2X receiving terminal. Alternatively, the V2X terminal (UE-1) may be a V2X receiving terminal and the V2X terminal (UE-2) may be a V2X transmitting terminal. The V2X terminal (UE-1) may receive a SIB (system information block) from the base station to which it is connected (or on which it is camping), and the V2X terminal (UE-2) may receive a SIB from another base station to which it is connected (or on which it is camping). At this time, the SIB may be an existing SIB, or a SIB defined separately for V2X. In addition, the information of the SIB received by the V2X terminal (UE-1) and the information of the SIB received by the V2X terminal (UE-2) may be different from each other. Therefore, in order to perform V2X communication between terminals (UE-1, UE-2) located in different cells, the information may be unified, or the information may be signaled, and an additional method of interpreting the SIB information transmitted from each different cell may be required.

In FIG. 1, a V2X system composed of V2X terminals (UE-1, UE-2) is illustrated for the convenience of explanation, but the present disclosure is not limited thereto, and communication may be performed between more V2X terminals. In addition, the interface (uplink and downlink) between a base station and V2X terminals may be named as a Uu interface, and the sidelink between V2X terminals may be named as a PC5 interface. Therefore, in the present disclosure, these may be used interchangeably. Meanwhile, in the present disclosure, a terminal may include a vehicle supporting vehicular-to-vehicular (V2V) communication, a vehicle or a pedestrian's handset (e.g., a smartphone) supporting vehicular-to-pedestrian (V2P) communication, a vehicle supporting vehicular-to-network (V2N) communication, or a vehicle supporting vehicular-to-infrastructure (V2I) communication. In addition, in the present disclosure, the terminal may include an RSU (road side unit) equipped with a terminal function, an RSU equipped with a base station function, or an RSU equipped with a part of a base station function and a part of a terminal function.

In addition, according to an embodiment of the present disclosure, the base station may be a base station that supports both V2X communication and general cellular communication, or may be a base station that supports only V2X communication. In this case, the base station may be a 5G base station (gNB), a 4G base station (eNB), or an RSU. Accordingly, the base station in the present disclosure may also be referred to as an RSU.

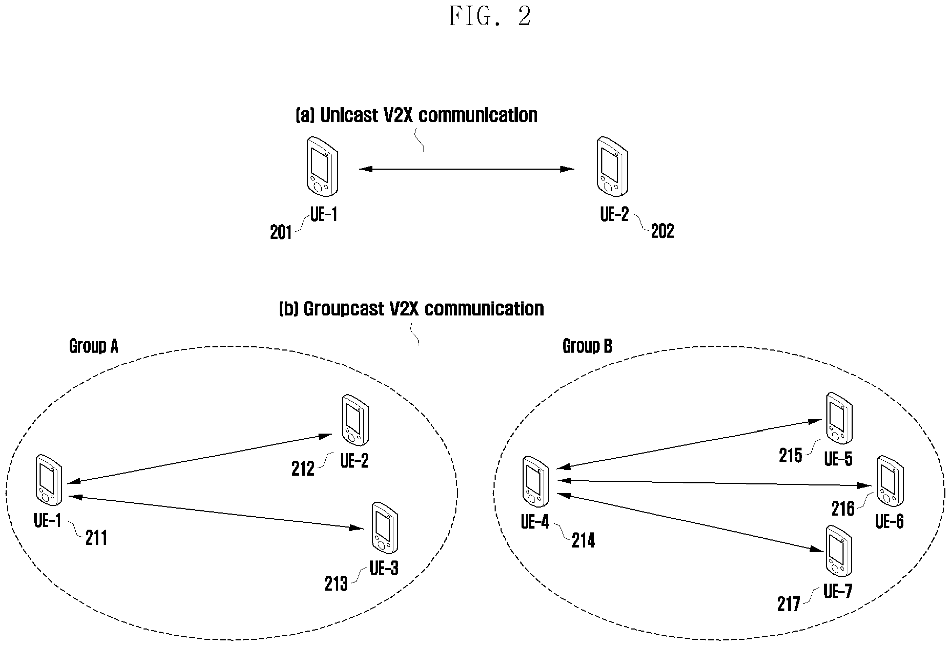

FIG. 2 is a diagram illustrating a V2X communication method through a sidelink according to an embodiment of the present disclosure.

With reference to (a) of FIG. 2, UE-1 201 (e.g., TX terminal) and UE-2 202 (e.g., RX terminal) may perform one-to-one communication, which may be called unicast communication.

With reference to (b) of FIG. 2, a TX terminal and an RX terminal may perform one-to-many communication, which may be named groupcast or multicast. In (b) of FIG. 2, UE-1 211, UE-2 212, and UE-3 213 form one group (Group A) and perform groupcast communication, and UE-4 214, UE-5 215, UE-6 216, and UE-7 217 form another group (Group B) and perform groupcast communication. Each terminal performs groupcast communication only within the group to which it belongs, and communication between different groups may be achieved through unicast, groupcast, or broadcast communication. In (b) of FIG. 2, it is illustrated that two groups (Group A, Group B) are formed, but this is not limited thereto.

Meanwhile, although not shown in FIG. 2, V2X terminals may perform broadcast communication. Broadcast communication means a case where all V2X terminals receive data and control information transmitted by a V2X transmitting terminal through a sidelink. For example, if it is assumed that UE-1 211 is a transmitting terminal for broadcast in FIG. 2 (b), all terminals (UE-2 212, UE-3 213, UE-4 214, UE-5 215, UE-6 216, and UE-7 217) may receive data and control information transmitted by UE-1 211.

In NR V2X, unlike LTE V2X, support may be considered for a vehicle terminal to send data to only one specific node through unicast and a vehicle terminal to send data to multiple specific nodes through groupcast. For example, these unicast and groupcast technologies may be useful in service scenarios such as platooning, a technology that connects two or more vehicles to a single network and moves in a group form. Specifically, the leader node of a group connected by platooning may need unicast communication to control one specific node, and group cast communication to simultaneously control a group consisting of multiple specific nodes.

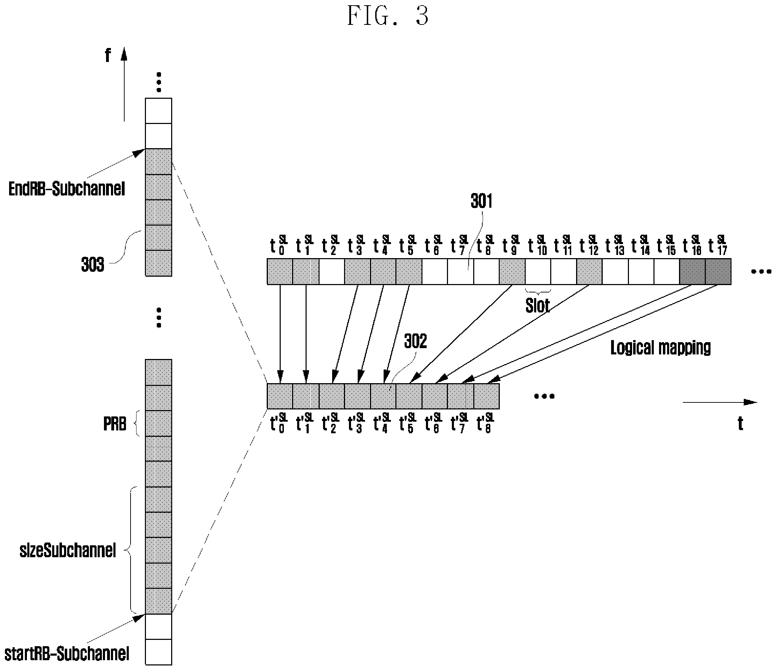

FIG. 3 is a diagram for explaining a resource pool defined as a set of resources in time and frequency used for transmission and reception of a sidelink according to an embodiment of the present disclosure. In the resource pool, a resource granularity in the time axis may be a slot. In addition, a resource granularity in the frequency axis may be a sub-channel composed of one or more physical resource blocks (PRBs). Although this disclosure describes an example in which the resource pool is allocated discontinuously in time, the resource pool may be allocated continuously in time. In addition, although this disclosure describes an example in which the resource pool is allocated continuously in frequency, it does not exclude a method in which the resource pool is allocated discontinuously in frequency.

With reference to FIG. 3, a case 301 in which a resource pool is allocated discontinuously in time is illustrated. With reference to FIG. 3, a case in which a resource granularity in time is composed of slots is illustrated. First, a sidelink slot may be defined in a slot used as an uplink. Specifically, the length of a symbol used as a sidelink in one slot may be configured as sidelink BWP (Bandwidth Part) information. Therefore, among the slots used as an uplink, slots in which the length of a symbol configured as a sidelink is not guaranteed may not be a sidelink slot. In addition, slots belonging to a resource pool exclude slots in which an S-SSB (Sidelink Synchronization Signal Block) is transmitted. With reference to 301, a set (set) of slots that may be used as a sidelink in time, excluding such slots, is illustrated as ( $t_0^{SL}$, $t_1^{SL}$, $t_2^{SL}$, $\cdots$ ). The shaded portion in 301 represents sidelink slots belonging to a resource pool. Sidelink slots belonging to a resource pool may be (pre-) configured with resource pool information through a bitmap. With reference to 302, a set of sidelink slots belonging to a resource pool in time is illustrated as ( $t'^{SL}_0$, $t'^{SL}_1$, $t'^{SL}_2$, $\cdots$ ). In the present disclosure, the meaning of (pre-)configuration may mean configuration information that is preconfigured and stored in advance in a terminal, or may mean a case where a terminal is configured from a base station in a cell-common manner. Here, cell-common may mean that terminals in a cell receive configuration of the same information from the base station. At this time, a method in which the terminal obtains cell-common information by receiving a sidelink SL-SIB (sidelink system information block) from the base station may be considered. In addition, it may mean a case in which the terminal is configured in a UE-specific manner after an RRC connection is established with the base station. Here, UE-specific may be replaced with the term UE-dedicated and may mean that each terminal receives configuration information with a specific value. At this time, a method in which a terminal receives an RRC message from a base station and obtains UE-specific information may be considered. In addition, a method in which (pre-)configuration is configured with resource pool information and a method in which (pre-)configuration is not configured with resource pool information may be considered. In the case of (pre-)configuration with resource pool information, all terminals operating in the corresponding resource pool may operate with common configuration information, except for a case in which the terminal is configured in a UE-specific way after an RRC connection with the base station is established. However, a method in which (pre-)configuration is not configured with resource pool information is a method in which it is basically configured independently of the resource pool configuration information. For example, one or more modes are (pre-)configurated in a resource pool (for example, A, B, and C), and the (pre-)configuration information independent of the resource pool configuration information may indicate which mode among the (pre-)configurated modes in the resource pool to use (for example, A or B or C).

With reference to 303 in FIG. 3, a case where a resource pool is allocated continuously on the frequency is illustrated. Resource allocation on the frequency axis may be configured with sidelink BWP (Bandwidth Part) information and may be done in units of subchannels. A subchannel may be defined as a resource granularity on the frequency composed of one or more PRBs (Physical Resource Blocks). That is, a subchannel may be defined as an integer multiple of a PRB. With reference to 303, a subchannel may be composed of five consecutive PRBs, and a subchannel size (sizeSubchannel) may be the size of five consecutive PRBs. However, the contents illustrated in the drawing are only examples of the present disclosure, and the size of a subchannel may be configured differently, and although one subchannel is generally composed of consecutive PRBs, it does not necessarily have to be composed of consecutive PRBs. A subchannel may be a basic unit of resource allocation for a PSSCH. In 303, startRB -Subchannel may indicate the start position of a subchannel on the frequency in the resource pool. When resource allocation on the frequency axis is done on a subchannel basis, resources on the frequency may be allocated through configuration information such as the RB (Resource Block) index (startRB -Subchannel) where the subchannel starts, information on how many PRBs the subchannel consists of (sizeSubchannel), and the total number of subchannels (numSubchannel). At this time, information on startRB -Subchannel, sizeSubchannel, and numSubchannel may be (pre-)configured with resource pool information on the frequency.

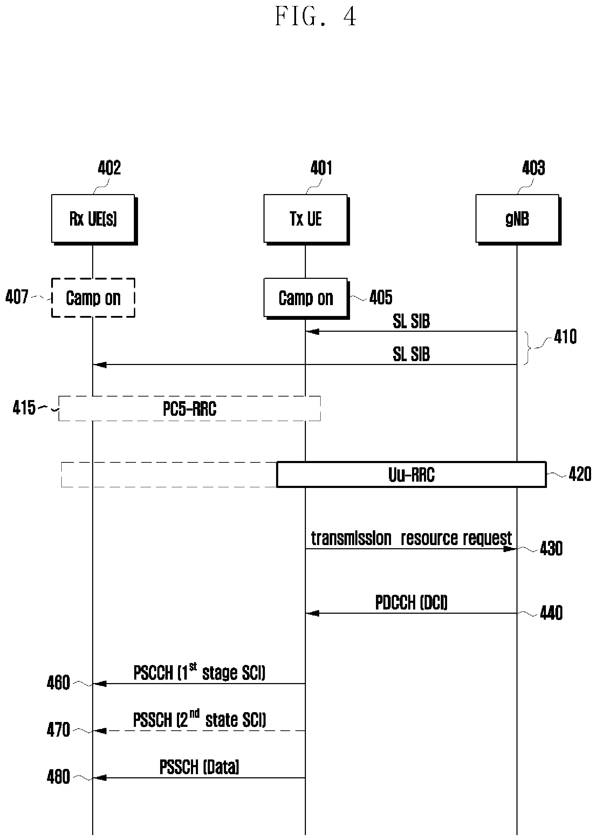

FIG. 4 is a diagram illustrating a method for a base station to allocate transmission resources in a sidelink according to an embodiment of the present disclosure.

The method by which a base station allocates transmission resources in a sidelink is referred to as Mode 1 hereinafter. Mode 1 may be a scheduled resource allocation. Mode 1 may represent a method by which a base station allocates resources used for sidelink transmission to RRC-connected terminals in a dedicated scheduling manner. The method of Mode 1 may be effective for interference management and resource pool management because the base station may manage sidelink resources.

With reference to FIG. 4, a transmitting terminal 401 may camp on a base station (cell) 403 (405). The camp on may mean, for example, a state in which a terminal in a standby state (RRC_IDLE) may select (or reselect) a base station (cell) as needed and receive system information or paging information.

Meanwhile, if the receiving terminal 402 is located within the coverage of the base station (cell) 403, the receiving terminal 402 may camp on the base station (cell) 403 (407). Conversely, if the receiving terminal 402 is located outside the coverage of the base station (cell) 403, the receiving terminal 402 may not camp on the base station (cell) 403.

In the present disclosure, a receiving terminal 402 represents a terminal that receives data transmitted by a transmitting terminal 401.

A transmitting terminal 401 and a receiving terminal 402 may receive a SL-SIB (sidelink system information block) from a base station 403 (410). The SL-SIB information may include sidelink resource pool information for sidelink transmission and reception, parameter configuration information for sensing operation, information for configuring sidelink synchronization, or carrier information for sidelink transmission and reception operating at different frequencies.

When data traffic for V2X is generated at the transmitting terminal 401, the transmitting terminal 401 may be RRC-connected with the base station 403(420).

Here, the RRC connection between the terminal and the base station may be referred to as Uu -RRC. The Uu -RRC connection process 420 may be performed before the data traffic of the transmitting terminal 401 is generated. In addition, in Mode 1, the transmitting terminal may perform transmission to the receiving terminal through the sidelink when the Uu -RRC connection process 420 between the base station 403 and the receiving terminal 402 is performed. In contrast, in Mode 1, the transmitting terminal may perform transmission to the receiving terminal through the sidelink even when the Uu -RRC connection process 420 between the base station 403 and the receiving terminal 402 is not performed.

A transmitting terminal 401 may request a base station for transmission resources that can perform V2X communication with a receiving terminal 402(430). At this time, the transmitting terminal 401 may request sidelink transmission resources from the base station 403 using a physical uplink control channel (PUCCH), an RRC message, or a MAC (medium access control) CE (control element). Meanwhile, the MAC CE may be a buffer status report (BSR) MAC CE in a new format (including at least an indicator indicating that it is a buffer status report for V2X communication and information on the size of data buffered for D2D communication). In addition, the transmitting terminal 401 may request sidelink resources through a scheduling request (SR) bit transmitted through an uplink physical control channel.

Next, the base station 403 may allocate V2X transmission resources to the transmission terminal 401. At this time, the base station may allocate transmission resources in a dynamic grant or configured grant manner.

First, in the case of the dynamic grant scheme, the base station may allocate resources for TB transmission through DCI (downlink control information). Sidelink scheduling information included in the DCI may include parameters related to transmission timing and frequency allocation location information fields for initial transmission and retransmission. The DCI for the dynamic grant scheme may be CRC scrambled with SL-V-RNTI to indicate that it is the dynamic grant scheme.

Next, in the case of the configured grant method, the base station may periodically allocate resources for TB transmission by configuring an SPS (semi-persistent scheduling) interval through Uu - RRC. At this time, the base station may allocate resources for one TB through DCI. Sidelink scheduling information for one TB included in the DCI may include parameters related to transmission timing and frequency allocation location information of initial transmission and retransmission resources. When resources are allocated in the configured grant method, transmission timing (occasion) and frequency allocation location of initial transmission and retransmission for one TB may be determined by the DCI, and resources for the next TB may be repeated at SPS intervals. The DCI for the configured grant method may be CRC scrambled with SL-SPS-V-RNTI to indicate that it is the configured grant method. In addition, the configured grant (CG) method may be divided into Type 1 CG and Type 2 CG. In the case of Type 2 CG, resources configured as configured grant may be activated/deactivated through the DCI.

Therefore, in the case of Mode 1, the base station 403 may instruct the transmitting terminal 401 to schedule sidelink communication with the receiving terminal 402 through DCI transmission through PDCCH (physical downlink control channel) 440.

Specifically, the DCI (Downlink Control Information) used by the base station 403 for sidelink communication to the transmitting terminal 401 may have DCI format 3_0 or DCI format 3_1. DCI format 3_0 may be defined as DCI for scheduling NR sidelink in one cell, and DCI format 3_1 may be defined as DCI for scheduling LTE sidelink in one cell.

In the case of broadcast transmission, the transmitting terminal 401 may perform transmission without RRC configuration 415 for the sidelink. In contrast, in the case of unicast or groupcast transmission, the transmitting terminal 401 may perform an RRC connection one-to-one with another terminal. Here, the RRC connection between terminals may be referred to as PC5-RRC 415 to distinguish it from Uu -RRC. In the case of groupcast, PC5-RRC 415 may be individually connected between terminals in the group. With reference to FIG. 4, although the connection of PC5-RRC 415 is depicted as an operation after transmission 410 of SL-SIB, it may be performed at any time before transmission 410 of SL-SIB or before transmission of SCI.

Next, the transmitting terminal 401 may transmit SCI (1st stage) to the receiving terminal 402 through PSCCH (physical sidelink control channel) 460. In addition, the transmitting terminal 401 may transmit SCI (2nd stage) to the receiving terminal 402 through PSSCH 470. At this time, the 1st stage SCI may include information related to resource allocation, and the 2nd stage SCI may include other control information. In addition, the transmitting terminal 401 may transmit data to the receiving terminal 402 through PSSCH 480. At this time, the SCI (1st stage), the SCI (2nd stage), and the PSSCH may be transmitted together in the same slot.

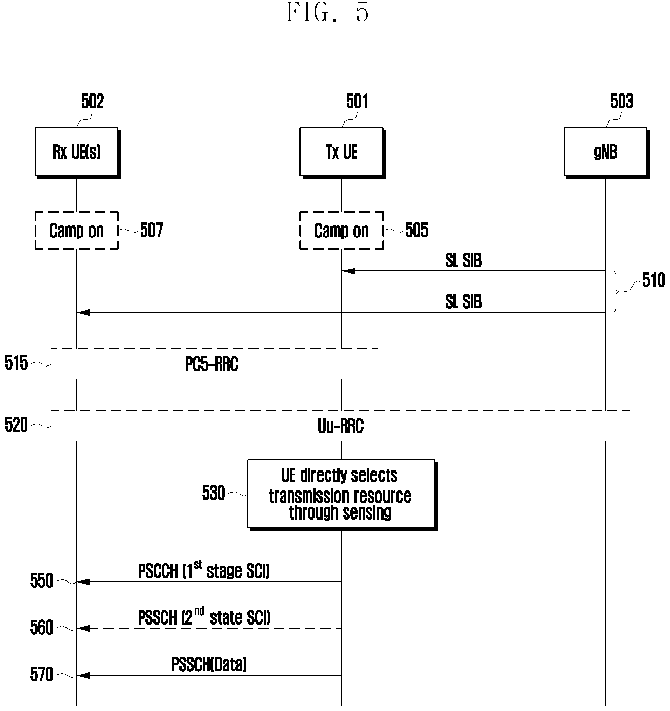

FIG. 5 is a diagram illustrating a method for a terminal to directly allocate transmission resources of a sidelink through sensing in a sidelink according to an embodiment of the present disclosure.

Hereinafter, the method in which a terminal directly allocates sidelink transmission resources through sensing in the sidelink will be referred to as Mode 2. Mode 2 may also be referred to as UE autonomous resource selection. In Mode 2, a base station 503 provides a sidelink transmission/reception resource pool for V2X as system information, and a transmitting terminal 501 may select transmission resources according to a configured rule. Unlike Mode 1 in which the base station is directly involved in resource allocation, FIG. 5 is different in that a transmitting terminal 501 autonomously selects resources and transmits data on the basis of a resource pool received in advance through system information.

With reference to FIG. 5, a transmitting terminal 501 may camp on a base station (cell) 503(505). The camp on may mean, for example, a state in which a terminal in a standby state (RRC_IDLE) can select (or reselect) a base station (cell) as needed and receive system information or paging information, etc. In addition, with reference to FIG. 5, unlike FIG. 4 described above, in the case of Mode 2, if the transmitting terminal 501 is located within the coverage of the base station (cell) 503, the transmitting terminal 501 may camp on the base station (cell) 503 (507). Conversely, if the transmitting terminal 501 is located outside the coverage of the base station (cell) 503, the transmitting terminal 501 may not camp on the base station (cell) 503.

Meanwhile, if the receiving terminal 502 is located within the coverage of the base station (cell) 503, the receiving terminal 502 may camp on the base station (cell) 503(507). Conversely, if the receiving terminal 502 is located outside the coverage of the base station (cell) 503, the receiving terminal 502 may not camp on the base station (cell) 503.

In the present disclosure, a receiving terminal 502 represents a terminal that receives data transmitted by a transmitting terminal 501.

A transmitting terminal 501 and a receiving terminal 502 may receive a SL-SIB (sidelink system information block) from a base station 503(510). The SL-SIB information may include sidelink resource pool information for sidelink transmission and reception, parameter configuration information for sensing operation, information for configuring sidelink synchronization, or carrier information for sidelink transmission and reception operating at different frequencies.

The difference between FIG. 4 and FIG. 5 is that in the case of FIG. 4, the base station 503 and the terminal 501 operate in an RRC connected state, whereas in FIG. 5, the terminal can also operate in an idle mode 520 (non-RRC connected state). In addition, even in the RRC connected state 520, the base station 503 may not directly participate in resource allocation and may allow the transmitting terminal 501 to autonomously select a transmission resource. Here, the RRC connection between the terminal 501 and the base station 503 may be referred to as Uu -RRC 520. When data traffic for V2X is generated in the transmitting terminal 501, the transmitting terminal 501 may receive a resource pool through system information received from the base station 503 and the transmitting terminal 501 may directly select a resource in the time/frequency domain through sensing within the received resource pool 530. Once a resource is finally selected, the selected resource is determined as a grant for sidelink transmission.

In the case of broadcast transmission, the transmitting terminal 501 may perform transmission without RRC configuration 515 for the sidelink. In contrast, in the case of unicast or groupcast transmission, the transmitting terminal 501 may perform one-to-one RRC connection with another terminal. Here, The RRC connection between terminals may be referred to as PC5-RRC 515 to distinguish it from Uu -RRC. In the case of groupcast, PC5-RRC 515 may be individually connected between terminals in the group. With reference to FIG. 5, the connection of PC5-RRC 515 is depicted as an operation after transmission 510 of SL-SIB, but it may be performed at any time before transmission 510 of SL-SIB or before transmission of SCI.

Next, the transmitting terminal 501 may transmit SCI (1st stage) to the receiving terminal 502 through the PSCCH 550. In addition, the transmitting terminal 401 may transmit SCI (2nd stage) to the receiving terminal 402 through the PSSCH 560. At this time, the 1st stage SCI may include information related to resource allocation, and the 2nd stage SCI may include other control information. In addition, the transmitting terminal 501 may transmit data to the receiving terminal 502 through the PSSCH 570. At this time, the SCI (1st stage), the SCI (2nd stage), and the PSSCH may be transmitted together in the same slot.

Specifically, the SCI (Downlink Control Information) used by the transmitting terminal 401 and 501 for sidelink communication to the receiving terminal 402 and 502 may have SCI format 1-A as SCI (1st stage). In addition, SCI format 2-A or SCI format 2-B may be used as SCI (2nd stage). In the SCI (2nd stage), SCI format 2-A may be used to include information for PSSCH decoding when HARQ feedback is not used or when HARQ feedback is used and includes both ACK or NACK information. In contrast, SCI format 2-B may be used to include information for PSSCH decoding when HARQ feedback is not used or when HARQ feedback is used and includes only NACK information. For example, SCI format 2-B may be used exclusively for groupcast transmission.

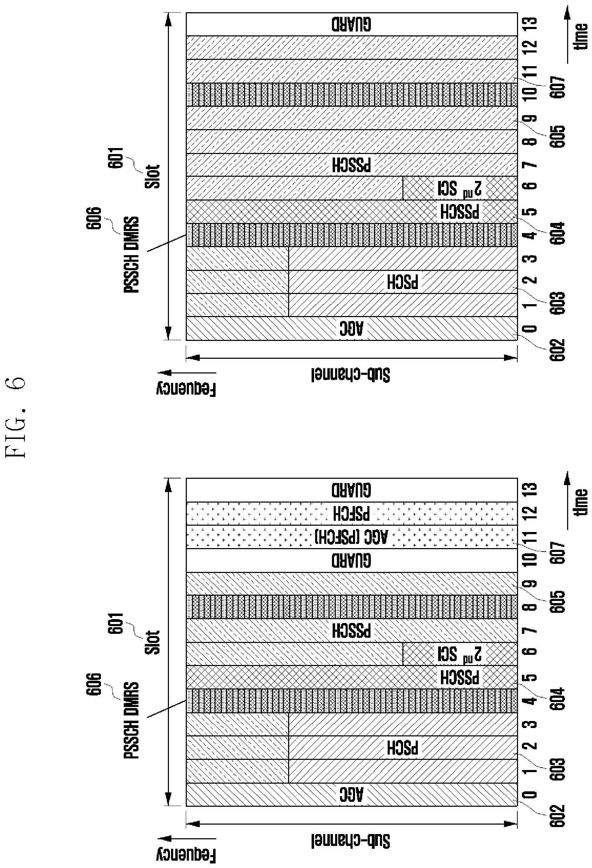

FIG. 6 is a diagram illustrating a mapping structure of physical channels mapped to one slot in a sidelink according to an embodiment of the present disclosure.

Specifically, mapping for PSCCH/PSSCH/PSFCH physical channels is illustrated in FIG. 6. In the case of PSFCH, if HARQ feedback of sidelink is activated in the upper layer, the temporal resource of PSFCH may be (pre-)configured with resource pool information. Here, the temporal resource in which PSFCH is transmitted may be (pre-)configured with one of the values of every 0, 1, 2, and 4 slots. Here, '0' means that the PSFCH resource is not used. And 1, 2, and 4 may mean that the PSFCH resource is transmitted every 1, 2, and 4 slots, respectively. FIG. 6(a) illustrates the structure of a slot in which PSFCH resources are not configured, and FIG. 6(b) illustrates the structure of a slot in which PSFCH resources are configured. PSCCH/PSSCH/PSFCH may be allocated to one or more subchannels in frequency. For details on subchannel allocation, refer to the description of FIG. 3. Next, with reference to FIG. 6 to explain the time mapping of PSCCH/PSSCH/PSFCH, one or more symbols before a transmitting terminal transmits PSCCH/PSSCH/PSFCH in a corresponding slot 601 may be used as a area 602 for AGC. If the corresponding symbol(s) are used for AGC, a method of repeatedly transmitting a signal of another channel in the corresponding symbol area may be considered. At this time, the repeated signal of another channel may be considered as some of the PSCCH symbols or PSSCH symbols. Alternatively, a preamble may be transmitted in the AGC area. In the case where a preamble signal is transmitted, there is an advantage in that the AGC execution time may be shortened compared to the method of repeatedly transmitting signals of another channel. If a preamble signal is transmitted for AGC, a specific sequence may be used as the preamble signal 602, and at this time, a sequence such as PSSCH DMRS, PSCCH DMRS, and CSI-RS may be used as the preamble. The sequence used as a preamble in the present disclosure is not limited to the above-described example. Additionally, according to FIG. 6, control information related to resource allocation in the early symbols of a slot is transmitted as 1st stage SCI (sidelink control information) to PSCCH 603, and other control information may be transmitted as 2nd stage SCI to the area 604 of PSSCH. Data scheduled by the control information may be transmitted to PSSCH 605. At this time, the temporal position at which the 2nd stage SCI is transmitted may be mapped from the symbol at which the first PSSCH DMRS 606 is transmitted. The temporal position at which the PSSCH DMRS 606 is transmitted may be different in a slot at which a PSFCH is transmitted and a slot at which a PSFCH is not transmitted, as illustrated in FIG. 6(a) and FIG. 6(b). FIG. 6(a) illustrates that a physical sidelink feedback channel (PSFCH) 607, which is a physical channel for transmitting feedback information, is located at the last part of the slot. A predetermined empty time (Guard) may be secured between the PSSCH 605 and the PSFCH 607 so that a terminal that has transmitted and received the PSSCH 605 may prepare to transmit or receive the PSFCH 607. In addition, a predetermined empty period (Guard) may be secured after transmitting and receiving the PSFCH 607.

Frequency range 2 (hereinafter referred to as FR2) may provide a wider available bandwidth than existing communication bands, and due to this advantage, its usage is being studied as a band that supports various 5G communication services. FR2 has a requirement that beamforming must be performed when establishing a link in order to overcome relatively strong path attenuation. The existing base station-based FR2 communication method broadcasts the identity signal of the base station, such as SSB, using many radio resources in the form of beam sweeping, and the terminal that acquires the above information transmits an access request, thereby performing initial beam establishment and initial link configuration.

Recently, a method to support device-to-device communication through sidelink in FR2 has been discussed, which inevitably requires beam-based link configuration technology between terminals.

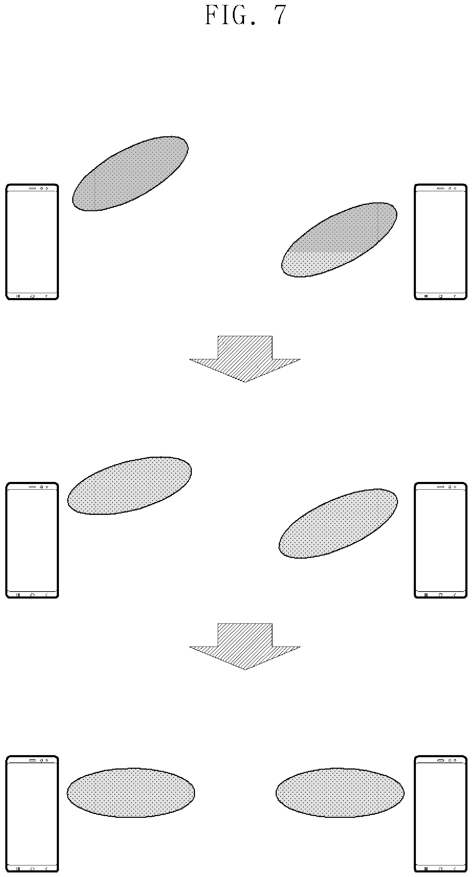

FIG. 7 is a diagram illustrating an example of a beam sweeping operation for initial link configuration between terminals according to an embodiment of the present disclosure.

As in the case of link configuration controlled by the base station, direct communication link configuration between terminals also requires initial beam configuration through beam sweeping, and the above operation is expressed in a diagram as in FIG. 7. A terminal that wishes to transmit information through a sidelink transmits information necessary for searching for a target terminal to the surroundings in the form of Tx beam sweeping, and a terminal that wishes to receive information through a sidelink detects a terminal that wishes to transmit information to itself through an Rx beam sweeping process. The beam sweeping operation is performed independently by each of the transmitting terminal and the target terminal, and depending on the environment, the initial beam configuration method and the terminal detection technique, several or dozens of beam change operations must be performed before the beam configuration and terminal detection between the transmitting terminal and the target terminal can be completed.

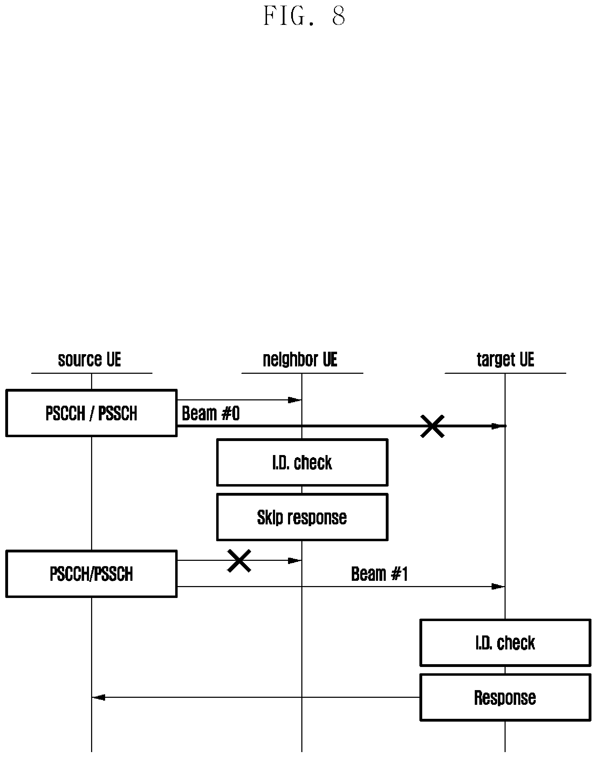

FIG. 8 is a diagram illustrating an example of initial link configuration for device-to-device communication using a base station control method.

With reference to FIG. 8, a terminal (source terminal, source UE) that wishes to perform information transmission through a sidelink transmits information corresponding to its own identity (UE ID, service ID, etc.) to a neighboring terminal through a Tx beam sweeping process, and a terminal among the neighboring terminals that receive the information and wish to perform sidelink communication with the source terminal transmits a response including its own ID information to the source terminal using the beam secured during the beam sweeping process. A terminal that transmits a response to the source terminal in this way is called a response UE. The source terminal measures responses of multiple received terminals, and if there is a target terminal (destination UE, target UE) among them, it requests the target terminal to establish a sidelink.

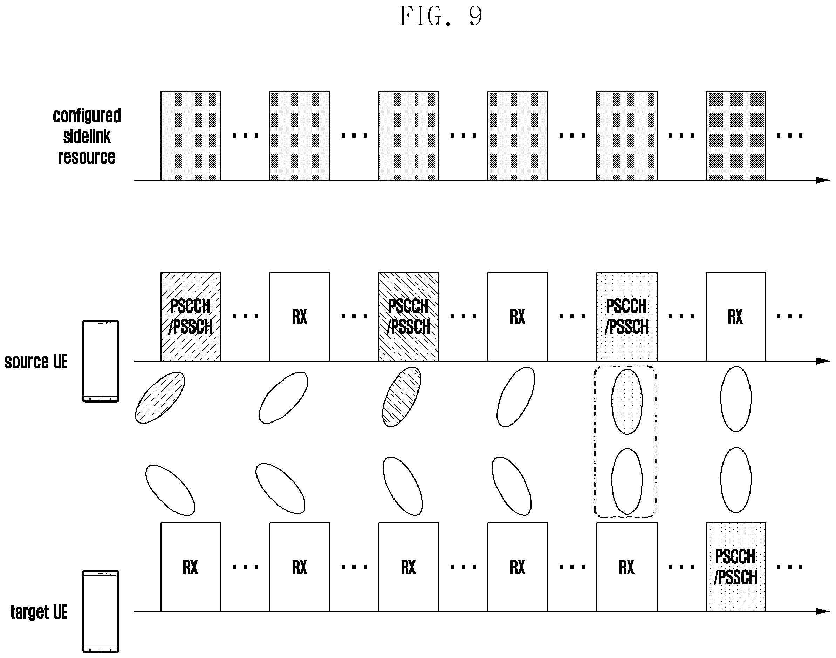

FIG. 9 is a diagram illustrating an example of transmission and reception of an initial link configuration signal for device-to-device communication using a base station control method.

Sidelink communication and transmission and reception of signals for sidelink communication are performed through pre-allocated specific radio resources, and within the radio resources, the source terminal may broadcast its ID information in a beam sweeping format through a shared channel. Since one transmission beam is generally applied within one slot or one time resource unit, the source terminal may broadcast ID information using multiple sidelink-dedicated radio resources for beam sweeping-based broadcasting. In addition, the source terminal attempts to receive a response using the same beam as the beam used for ID information broadcasting in preparation for a case where a terminal that has acquired the transmitted ID information transmits a response signal. Terminals that wish to receive the ID information of the source terminal attempt to receive the ID information of the source terminal through an Rx beam sweeping process, and if the ID information of the source terminal is successfully received, the source terminal may generate a Tx beam of the same form as the Rx beam used for reception and transmit a response signal through the Tx beam. Through this operation, a beam alignment task is performed between the source UE and the response UE, and if a target UE exists among the response UEs, an initial link configuration task is performed.

In the above beam sweeping process, all signals including ID information transmitted and received by the response terminal including the source terminal and the target terminal are transmitted through a shared channel. Therefore, all stages of transmission and reception through each beam during beam sweeping may be performed in slot units or the minimum time units of shared channel transmission. Therefore, a large amount of radio resources is used during the beam sweeping process, and a relatively large time delay occurs in the stage of initial beam and link configuration.

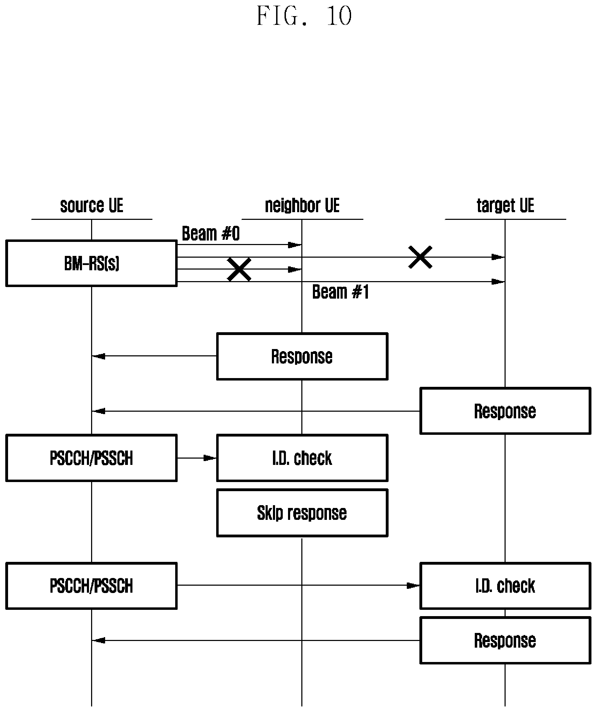

FIG. 10 is a diagram illustrating an example of a method for sequentially performing initial beam selection and terminal detection according to an embodiment of the present disclosure.

With reference to FIG. 10, the source terminal broadcasts a beam acquisition request without ID information, and since the signal for the beam acquisition request does not include ID information, it may be implemented in the form of an RS (reference signal) rather than a shared channel. That is, beam sweeping using multiple transmission beams within one slot or time resource unit becomes possible. In this case, since the terminals receiving the beam acquisition request cannot acquire information about the ID of the source terminal, a large number of terminals may transmit response signals compared to the case of FIG. 8. Accordingly, the possibility that a terminal other than the target terminal transmits a response signal increases, and therefore, an additional operation may be performed to find the target terminal after the initial beam configuration between the terminals.

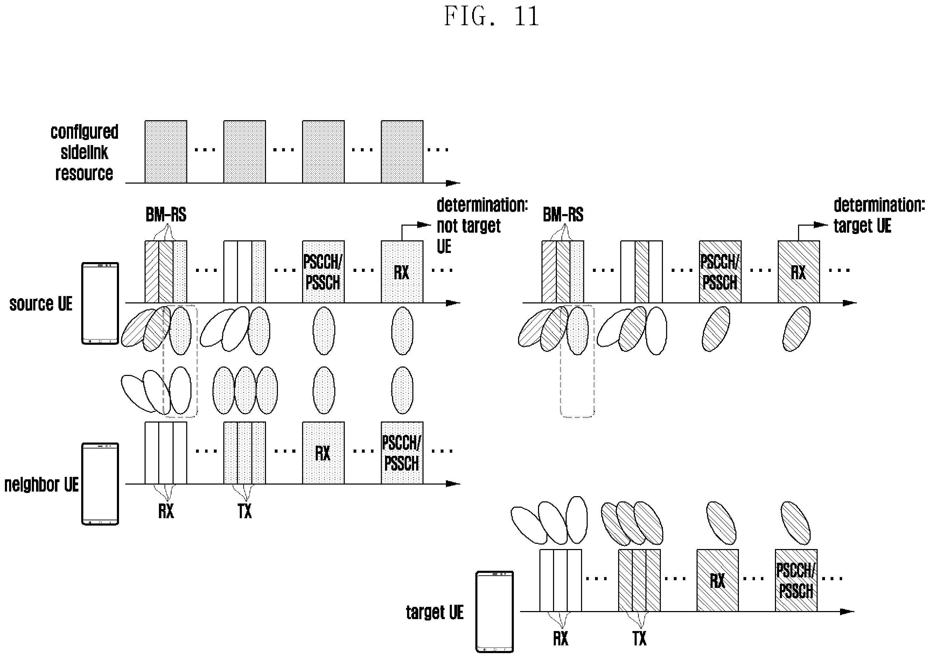

FIG. 11 is a diagram illustrating an example of signal transmission and reception when sequentially performing initial beam selection and terminal detection according to an embodiment of the present disclosure.

FIG. 11 illustrates an example of a case where the first terminal measured through the beam sweeping process is not the target terminal, and the beam sweeping process and target terminal identification task are repeated until the source terminal finds the target terminal.

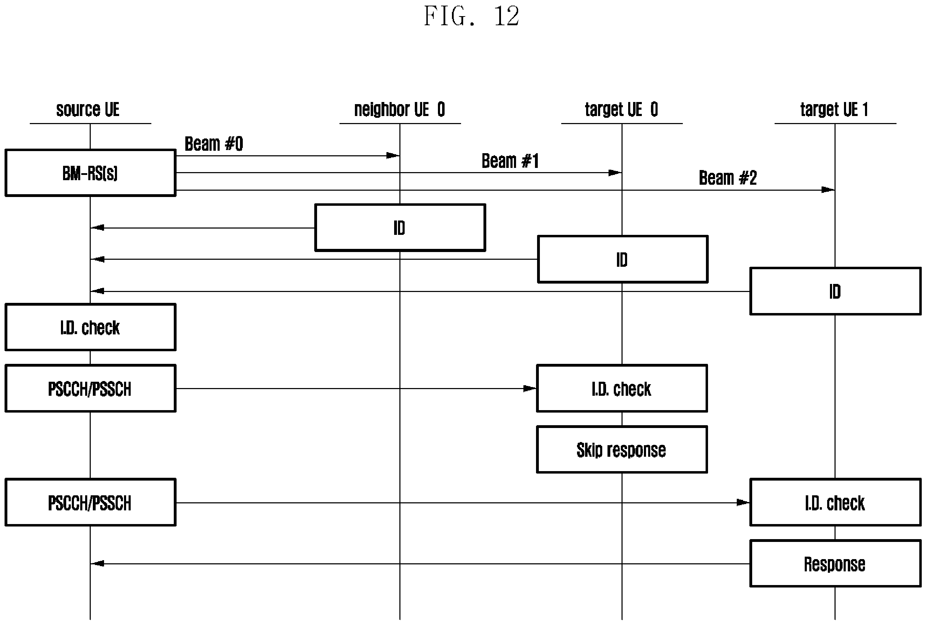

FIG. 12 is a diagram illustrating an example of an initial configuration method according to an embodiment of the present disclosure.

With reference to FIG. 12, the source terminal broadcasts a beam acquisition request in the form of RS without ID information, which is the same as that of FIG. 10, but unlike the case of FIG. 10, the response terminal may transmit its ID information together when transmitting a response signal. That is, the initial beam acquisition request transmission of the source terminal may be broadcast in a manner using multiple Tx beams within each slot or time unit, but the Rx beam sweeping for the source terminal to receive a response signal may be performed in a manner of generating one Rx beam within each slot or time unit of a shared channel. Accordingly, the source terminal may quickly complete the Tx beam sweeping task and then search for a response terminal expected to transmit a response signal through each different beam by using a different Rx beam for each slot or time unit.

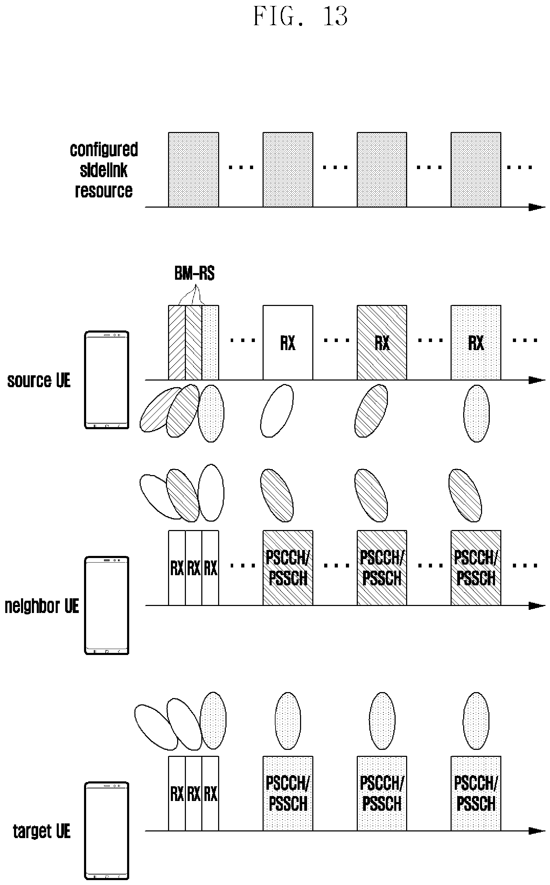

FIG. 13 is a diagram illustrating an example of signal transmission and reception in an initial configuration method according to an embodiment of the present disclosure.

With reference to FIG. 13, the source terminal may process rapidly the sweeping process targeting multiple terminals, and then sequentially perform multiple response terminal detection processes.

As can be identified from the example of FIG. 13, the method suggested by the present disclosure may perform the initial beam configuration and terminal detection tasks using a smaller amount of radio resources, or more precisely, a smaller amount of time units, compared to the method described in FIG. 8. This enables more efficient sidelink communication, and also significantly reduces the delay required for initial link configuration.

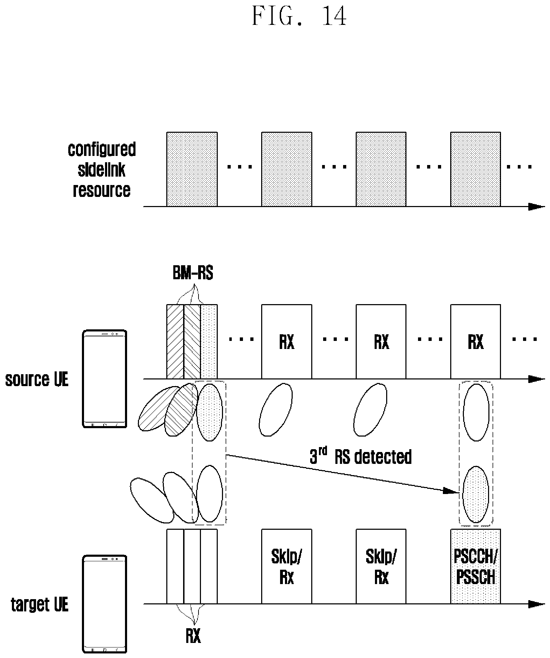

FIG. 14 is a diagram illustrating an example of transmission and reception in an initial configuration method according to another embodiment of the present disclosure.

Specifically, FIG. 14 illustrates an example of a case where, if the beam used by the response terminal to receive the beam acquisition request broadcast from the source terminal is the third beam, the response signal transmission is performed through the third response slot. That is, an example of a case is illustrated where the radio resources used for the response signal transmission are determined according to the slot in which the response terminal receives the beam acquisition request, the time domain position of the RS, or the beam used for receiving the beam acquisition request. When the method illustrated in FIG. 14 is applied, the response terminal may perform the response signal transmission only once.

The operation of the initial beam configuration and terminal detection technique proposed by the present disclosure is summarized as follows.

In the first step, each terminal may be allocated radio resources used for sidelink or device-to-device communication by the base station or network controller.

In the second step, the source terminal may transmit a beam acquisition request through a beam sweeping process to detect a target terminal within the allocated resources.

● In the above second step operation, the source terminal may transmit a beam acquisition request for Tx beam sweeping within a time resource unit. The time resource unit used for transmitting one beam acquisition request has a shorter length than a slot, and may be, for example, a portion of a slot. The Tx beam sweeping operation may be performed within a shorter time duration than the shared channel-based beam sweeping operation on a slot-by-slot basis supported by the terminal. For example, when performing S-PDSCH (or PSSCH) transmission, which is a channel used for sidelink data transmission, the terminal performs a beam sweeping operation for S-PDSCH (or PSSCH) transmission in slot units, whereas the beam sweeping operation through the beam acquisition request signal transmission may be performed in a manner of performing beam sweeping twice or more within one slot. Therefore, the Tx beam sweeping operation of the second step may be performed using a smaller number of slots compared to the conventional one.

● In the above second step, different radio resources per source terminal, per terminal group, or per service target may be used for beam acquisition requests.

In the third step, the source terminal attempts to receive a response signal through each of the Tx beams used in the second step, and the response terminal that receives the beam acquisition request of the source terminal may perform response signal transmission using the same Tx beam as the Rx beam used to receive the beam acquisition request.

● When performing the above third step operation, the response terminal may configure a response signal so that the source terminal can determine whether the target terminal responds on the basis of the response signal. For example, the response terminal may transmit its ID information together when transmitting the response signal.

In the fourth step, the source terminal may determine the target terminal and transmit ID information of the source terminal to the target terminal.

● In performing the above fourth step operation, the source terminal may select a terminal to receive its ID. For example, ID information may not be transmitted to a response terminal determined not to be a target terminal.

● In performing the above fourth step, the source terminal that transmits ID information to the selected response terminal may apply the same Tx beam as the Rx beam used to receive the response signal of each corresponding response terminal.

In the fifth step, the target terminal that has received the ID information of the source terminal may determine whether to perform sidelink or device-to-device communication with the source terminal and notify it to the source terminal.

Meanwhile, according to an embodiment of the present disclosure, radio resources used for sidelink or device-to-device communication may be allocated by dividing them into multiple subsets that can be used independently for each link, and initial beam configuration and terminal detection tasks may be performed for each subset. In this case, each terminal may be allocated multiple sidelink resource subsets, and may perform sidelink communication with a number of terminals equal to the number of allocated subsets simultaneously. For example, a terminal allocated two subsets may perform up to two independent sidelink connections simultaneously.

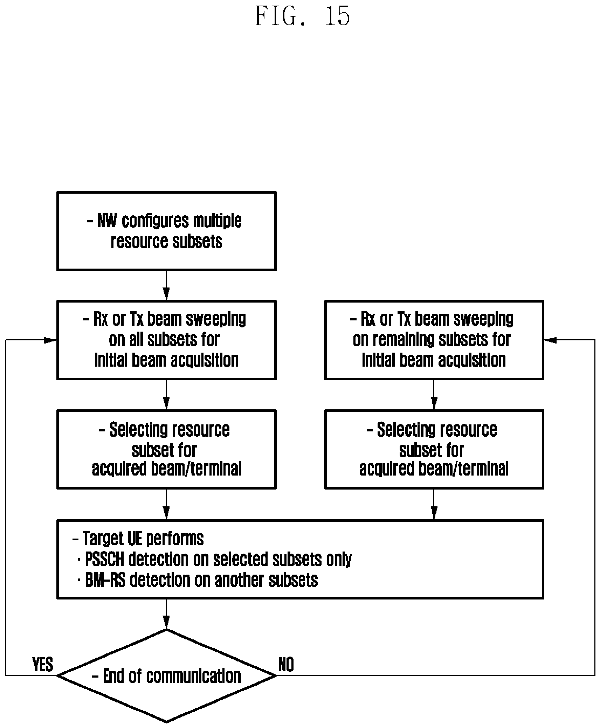

FIG. 15 is a diagram illustrating an example of radio resource configuration for multi-connectivity support according to an embodiment of the present disclosure.

The terminal performing sidelink communication in the first step may be allocated multiple sidelink resource subsets from a base station or a network.

In the second step, each terminal may perform initial beam configuration and terminal detection tasks by utilizing all subsets in the initial state.

In the third step, when the initial beam configuration between the source terminal and the target terminal is completed and the sidelink communication is confirmed, the terminal may select a subset of sidelink resources to be used for the sidelink communication.

In the fourth step, the above terminals performing sidelink communication may use an unused sidelink resource subset if additional sidelink configuration is required. In this case, initial beam configuration and terminal detection tasks may be performed within the selected sidelink resource subset.

When all configured sidelink communications are terminated, the terminal reverts to the initial configuration state and may perform initial beam configuration and terminal detection tasks utilizing all sidelink resource subsets.

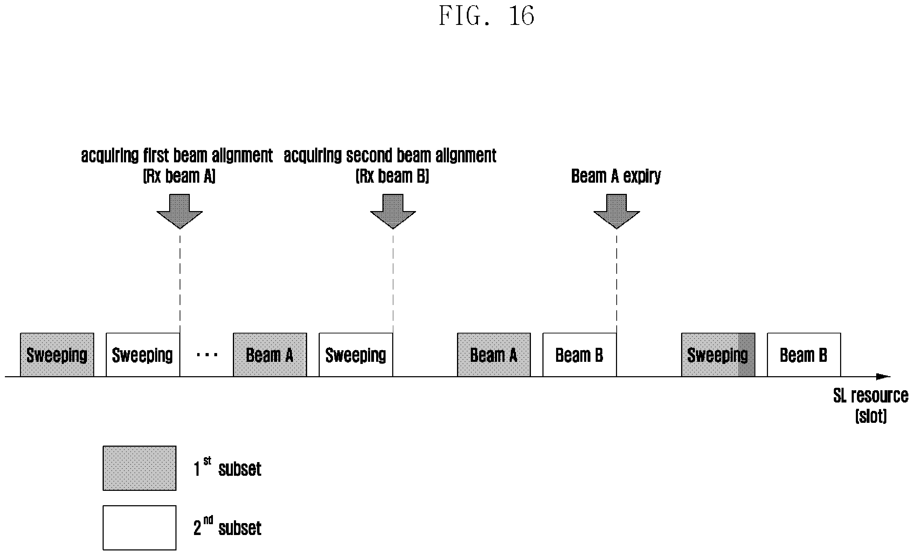

FIG. 16 is a diagram illustrating an example of multiple connections utilizing a subset of radio resources according to an embodiment of the present disclosure.

In an initial state, a terminal performs initial beam configuration and terminal detection tasks using all sidelink resource subsets, through which sidelink communication using beam A may be configured. The terminal receives additional configuration so that the sidelink communication using the beam A is performed through the first sidelink resource subset, and may attempt to configure a sidelink with another terminal by utilizing the second sidelink resource subset that is in an unused state. As a result of the above operation, the terminal receives another sidelink communication using beam B, and the communication using beam B may be performed through the second sidelink resource subset. When the sidelink communication using the first sidelink resource subset is terminated, the terminal may perform initial beam configuration and terminal detection tasks through the first sidelink resource subset.

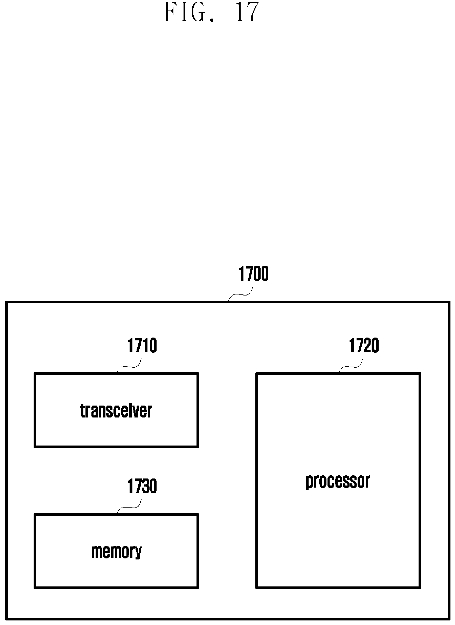

FIG. 17 is a block diagram of a terminal according to an embodiment of the present disclosure.

With reference to FIG. 17, the terminal 1700 may include a transceiver 1710, a control unit (processor) 1720, and a storage unit (memory) 1730. However, the components of the terminal 1700 according to an embodiment are not limited to the above-described example. According to another embodiment, the terminal 1700 may include more or fewer components than the above-described components. In addition, in a specific case, the transceiver 1710, the control unit 1720, and the storage unit 1730 may be implemented in the form of a single chip.

The transceiver 1710 may be composed of a transmitter and a receiver. The transceiver 1710 may transmit and receive signals with a base station. The signals may include control information and data. To this end, the transceiver 1710 may be composed of an RF transmitter that up-converts and amplifies the frequency of a transmitted signal, and an RF receiver that low-noise amplifies a received signal and down-converts the frequency. In addition, the transceiver 1710 may receive a signal through a wireless channel and output it to the control unit 1720, and transmit a signal output from the control unit 1720 through the wireless channel.

The control unit 1720 may control a series of processes by which the terminal 1700 can operate according to the embodiment of the present disclosure described above.

The storage unit 1730 may have an area for storing data required for controlling the control unit 1720 and data generated during control by the control unit 1720.

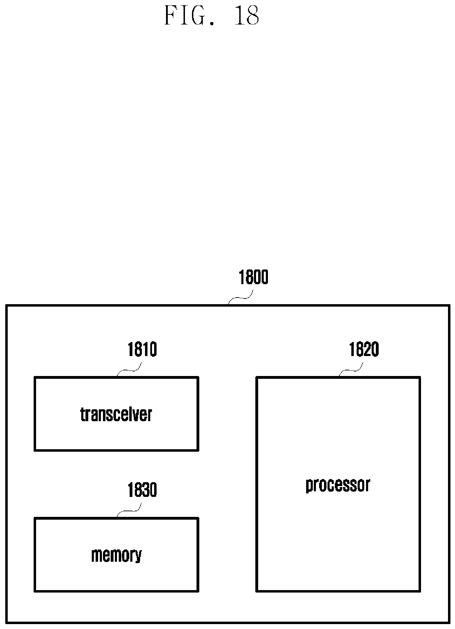

FIG. 18 is a block diagram of a base station according to an embodiment.

With reference to FIG. 18, the base station 1800 may include a transceiver 1810, a control unit (processor) 1820, and a storage unit (memory) 1830. However, the components of the base station 1800 according to an embodiment are not limited to the above-described example. According to another embodiment, the base station 1800 may include more or fewer components than the above-described components. In addition, in a specific case, the transceiver 1810, the control unit 1820, and the storage unit 1830 may be implemented in the form of a single chip. According to another embodiment, the transceiver 1810 may be composed of a transmitter and a receiver.

The transceiver 1810 may be composed of a transmitter and a receiver. The transceiver 1810 may transmit and receive signals with a terminal. The signals may include control information and data. To this end, the transceiver 1810 may be composed of an RF transmitter that up-converts and amplifies the frequency of a transmitted signal, and an RF receiver that low-noise amplifies the received signal and down-converts the frequency. In addition, the transceiver 1810 may receive a signal through a wireless channel and output it to the control unit 1820, and transmit a signal output from the control unit 1820 through the wireless channel.

The control unit 1820 may control a series of processes so that the base station 1800 can operate according to the embodiment of the present disclosure described above.

The storage unit 1830 may have an area for storing data required for controlling the control unit 1820 and data generated during control by the control unit 1820.

Meanwhile, the embodiments of the present disclosure disclosed in this specification and drawings are only specific examples presented to easily explain the technical content of the present disclosure and aid understanding of the present disclosure, and are not intended to limit the scope of the present disclosure. That is, it is obvious to those skilled in the art that other modified examples on the basis of the technical idea of the present disclosure may be implemented. In addition, each of the above embodiments may be operated in combination with each other as needed. For example, all embodiments of the present disclosure may be used in combination with each other to operate base stations and terminals.

## Claims

1. A method performed by a first terminal in a communication system, the method comprising:

   identifying a sidelink resource;
   transmitting a beam acquisition request on the sidelink resource;
   receiving, from a second terminal, a response to the beam acquisition request; and
   transmitting ID information of the first terminal to the second terminal, wherein the beam acquisition request is transmitted based on a reference signal without the ID information of the first terminal, and the beam acquisition request is transmitted based on a portion of one slot.

2. The method of claim 1, wherein a response to the beam acquisition request is received without ID information of the second terminal and the response to the beam acquisition request received without the ID information of the second terminal is received based on a portion of one slot.

3. The method of claim 1, wherein a response to the beam acquisition request comprises ID information of the second terminal and the response to the beam acquisition request comprising the ID information of the second terminal is received based on one slot.

4. The method of claim 3, further comprising determining whether the second terminal is a target terminal based on the ID information of the second terminal included in the response to the beam acquisition request, wherein
transmitting the ID information of the first terminal to the second terminal is that the ID information of the first terminal is transmitted to the second terminal based on the identification that the second terminal is a target terminal.

5. The method of claim 1, wherein the sidelink resource comprises multiple resource subsets, and each resource subset among the multiple resource subsets is used for sidelink communication with different terminals.

6. A method performed by a second terminal in a communication system, the method comprising:

   receiving a beam acquisition request from a first terminal on a sidelink resource;
   transmitting a response to the beam acquisition request from the first terminal; and
   receiving ID information of the first terminal from the first terminal, wherein the beam acquisition request is received based on a reference signal without the ID information of the first terminal, and the beam acquisition request is received based on a portion of one slot.

7. The method of claim 6, wherein the response to the beam acquisition request is transmitted without the ID information of the second terminal, and the response to the beam acquisition request received without the ID information of the second terminal is transmitted based on a portion of one slot.

8. The method of claim 6, wherein the response to the beam acquisition request comprises the ID information of the second terminal, and the response to the beam acquisition request comprising the ID information of the second terminal is transmitted based on one slot.

9. The method of claim 8, comprising receiving ID information of the first terminal from the first terminal, wherein receiving the ID information of the first terminal from the first terminal is based on that the second terminal is identified to be the target terminal based on the ID information of the second terminal included in the response to the beam acquisition request.

10. The method of claim 6, wherein the sidelink resource comprises multiple resource subsets, and each resource subset among the multiple resource subsets is used for sidelink communication with different terminals.

11. A first terminal in a communication system comprising:

   a transmitter; and
   a control unit configured to:

      identify a sidelink resource;
      transmit a beam acquisition request on the sidelink resource;
      receive, from the second terminal, a response to the beam acquisition request; and transmit ID information of the first terminal to the second terminal, wherein the beam acquisition request is transmitted based on a reference signal without the ID information of the first terminal, and the beam acquisition request is transmitted based on a portion of one slot.

12. The first terminal of claim 11, wherein the response to the beam acquisition request is received without ID information of the second terminal, and the response to the beam acquisition request received without the ID information of the second terminal is received based on a portion of one slot.

13. The first terminal of claim 11, wherein

   the response to the beam acquisition request comprises the ID information of the second terminal;
   the response to the beam acquisition request comprising the ID information of the second terminal is received based on one slot; and
   the control unit is configured to:

      identify whether the second terminal is a target terminal based on the ID information of the second terminal included in the response to the beam acquisition request; and
      transmit ID information of the first terminal to the second terminal based on the identification that the second terminal is a target terminal.

14. The first terminal of claim 11, wherein the sidelink resource comprises multiple resource subsets, and each resource subset among the multiple resource subsets is used for sidelink communication with different terminals.

15. A second terminal in a communication system comprising:

a transceiver; and
a control unit configured to:

receive a beam acquisition request from a first terminal on a sidelink resource;
transmit a response to the beam acquisition request from the first terminal; and
receive ID information of the first terminal from the first terminal, wherein
the beam acquisition request is received based on a reference signal without the ID information of the first terminal, and the beam acquisition request is received based on a portion of one slot.

FIG. 1A

(a) In-coverage scenario

# FIG. 1B

(b) Partial coverage
scenario

gNB/eNB/RSU

Downlink (DL)

Uplink (UL)

Sidelink (SL)

Sidelink (SL)

UE-1

UE-2

FIG. 1C

(c) Out-of-coverage
scenario

Sidelink (SL)

Sidelink (SL)

UE-1

UE-2

FIG. 1D

(d) Inter-cell V2X communication scenario

gNB/eNB/RSU

Uplink (UL)

Downlink (DL)

UE-2

Sidelink (SL)

Sidelink (SL)

gNB/eNB/RSU

Downlink (DL)

UE-1

Uplink (UL)

# FIG. 2

**(a) Unicast V2X communication**

UE-1  201 ←——————————→ UE-2  202

**(b) Groupcast V2X communication**

Group A

UE-1  211
UE-2  212
UE-3  213

Group B

UE-4  214
UE-5  215
UE-6  216
UE-7  217

FIG. 3

EP 4 525 324 A1

FIG. 4

24

# FIG. 5

502 — Rx UE(s)

501 — Tx UE

503 — gNB

Camp on — 507

Camp on — 505

SL SIB

SL SIB

510

PC5-RRC — 515

Uu-RRC — 520

530 — UE directly selects transmission resource through sensing

550 — PSCCH (1st stage SCI)

560 — PSSCH (2nd state SCI)

570 — PSSCH(Data)

# FIG. 6

FIG. 7

FIG. 8

| source UE | neighbor UE | target UE |
|-----------|-------------|-----------|

PSCCH / PSSCH → Beam #0

I.D. check

Skip response

PSCCH/PSSCH → Beam #1

I.D. check

Response

FIG. 9

FIG. 10

source UE         neighbor UE         target UE

Beam #0

BM-RS(s)

Beam #1

Response

Response

PSCCH/PSSCH      I.D. check

Skip response

PSCCH/PSSCH      I.D. check

Response

# FIG. 11

EP 4 525 324 A1

FIG. 12

# FIG. 13

configured
sidelink
resource

BM-RS

source UE

RX RX RX

neighbor UE

RX RX RX PSCCH/PSSCH PSCCH/PSSCH PSCCH/PSSCH

target UE

RX RX RX PSCCH/PSSCH PSCCH/PSSCH PSCCH/PSSCH

FIG. 14

FIG. 15

- NW configures multiple
resource subsets

- Rx or Tx beam sweeping
on all subsets for
initial beam acquisition

- Rx or Tx beam sweeping
on remaining subsets for
initial beam acquisition

- Selecting resource
subset for
acquired beam/terminal

- Selecting resource
subset for
acquired beam/terminal

- Target UE performs
· PSSCH detection on selected subsets only
· BM-RS detection on another subsets

YES  - End of communication  NO

## FIG. 16

acquiring first beam alignment
(Rx beam A)

acquiring second beam alignment
(Rx beam B)

Beam A expiry

| Sweeping | Sweeping | ⋯ | Beam A | Sweeping | | Beam A | Beam B | | Sweeping | Beam B |

SL resource
(slot)

1$^{st}$ subset

2$^{nd}$ subset

EP 4 525 324 A1

FIG. 17

1700

1710

transceiver

1730

memory

1720

processor

FIG. 18

1800

1810

transceiver

1820

processor

1830

memory

<table>
<tr><td colspan="2" align="center">**INTERNATIONAL SEARCH REPORT**</td><td colspan="2">International application No.<br>**PCT/KR2023/007928**</td></tr>
</table>

**A. CLASSIFICATION OF SUBJECT MATTER**

**H04B 7/06**(2006.01)i; **H04W 16/28**(2009.01)i; **H04B 7/0408**(2017.01)i; **H04W 72/20**(2023.01)i; **H04W 72/51**(2023.01)i; **H04W 76/14**(2018.01)i; **H04W 4/40**(2018.01)i

According to International Patent Classification (IPC) or to both national classification and IPC

**B. FIELDS SEARCHED**

Minimum documentation searched (classification system followed by classification symbols)

H04B 7/06(2006.01); H04L 1/18(2006.01); H04L 5/00(2006.01); H04W 16/28(2009.01); H04W 4/06(2009.01); H04W 4/40(2018.01); H04W 56/00(2009.01); H04W 72/02(2009.01); H04W 72/04(2009.01); H04W 8/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 빔 획득 요청(beam acquisition request), 단말 ID(terminal ID), 기준 신호(reference signal), 슬롯(slot)

**C. DOCUMENTS CONSIDERED TO BE RELEVANT**

| Category* | Citation of document, with indication, where appropriate, of the relevant passages | Relevant to claim No. |
|---|---|---|
| Y | US 2022-0046430 A1 (QUALCOMM INCORPORED) 10 February 2022 (2022-02-10)<br>See paragraphs [0049], [0075], [0094], [0148]-[0149], [0152]-[0153] and [0196]; and figures 9A-9B and 13. | 1-15 |
| Y | US 2021-0219268 A1 (CONVIDA WIRELESS, LLC) 15 July 2021 (2021-07-15)<br>See paragraphs [0172], [0177], [0187]-[0188] and [0192]-[0193]; and figure 6A. | 1-15 |
| A | US 2021-0168574 A1 (CONVIDA WIRELESS, LLC) 03 June 2021 (2021-06-03)<br>See paragraphs [0163]-[0266]; and figures 2-18B. | 1-15 |
| A | US 2020-0260231 A1 (LENOVO (SINGAPORE) PTE. LTD.) 13 August 2020 (2020-08-13)<br>See paragraphs [0056]-[0093]; and figures 2-7. | 1-15 |
| A | US 2021-0321343 A1 (QUALCOMM INCORPORED) 14 October 2021 (2021-10-14)<br>See paragraphs [0073]-[0144]; and figures 2-12. | 1-15 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 September 2023** | **01 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | International application No. |
| :---: | :---: |
| Information on patent family members | **PCT/KR2023/007928** |

| Patent document cited in search report | | | Publication date (day/month/year) | Patent family member(s) | | | Publication date (day/month/year) |
| --- | --- | --- | --- | --- | --- | --- | --- |
| US | 2022-0046430 | A1 | 10 February 2022 | None | | | |
| US | 2021-0219268 | A1 | 15 July 2021 | CN | 112567837 | A | 26 March 2021 |
| | | | | EP | 3821658 | A1 | 19 May 2021 |
| | | | | JP | 2021-534629 | A | 09 December 2021 |
| | | | | KR | 10-2021-0042129 | A | 16 April 2021 |
| | | | | WO | 2020-033088 | A1 | 13 February 2020 |
| US | 2021-0168574 | A1 | 03 June 2021 | CN | 112567673 | A | 26 March 2021 |
| | | | | EP | 3818655 | A1 | 12 May 2021 |
| | | | | JP | 2021-533683 | A | 02 December 2021 |
| | | | | KR | 10-2021-0042940 | A | 20 April 2021 |
| | | | | WO | 2020-033086 | A1 | 13 February 2020 |
| US | 2020-0260231 | A1 | 13 August 2020 | CN | 113424472 | A | 21 September 2021 |
| | | | | EP | 3921963 | A1 | 15 December 2021 |
| | | | | US | 11470452 | B2 | 11 October 2022 |
| | | | | US | 2023-0017340 | A1 | 19 January 2023 |
| | | | | WO | 2020-161544 | A1 | 13 August 2020 |
| US | 2021-0321343 | A1 | 14 October 2021 | CN | 115398994 | A | 25 November 2022 |
| | | | | EP | 4133810 | A1 | 15 February 2023 |
| | | | | US | 11665655 | B2 | 30 May 2023 |
| | | | | WO | 2021-206885 | A1 | 14 October 2021 |

Form PCT/ISA/210 (patent family annex) (July 2022)